# EUROPEAN PATENT APPLICATION

(11) **EP 1 612 680 A1**
(43) Date of publication of application: **04.01.2006**
(21) Application number: 04726279.5
(22) Date of filing: 07.04.2004
(51) Int. Cl.: G06F 12/00, H04N 1/21

(54) **IMAGE ACCUMULATION DEVICE AND PROGRAM**

(30) Priority: 07.04.2003 JP 2003102667; 09.04.2003 JP 2003105034; 09.04.2003 JP 2003105038
(71) Applicant: SEIKO EPSON CORPORATION, Shinjuku-ku, Tokyo 163-0811 (JP)
(72) Inventor: TSUBONO, Eiji, c/o Seiko Epson Corporation, Suwa-shi, Nagano 3928502 (JP)
(74) Representative: Cloughley, Peter Andrew
(86) International application number: PCT/JP2004/005042
(87) International publication number: WO 2004/090729

(57) **Abstract**

An image storage apparatus includes: storage means; selection means for selecting a folder in the storage means; and file operation means, for, in accordance with the selected folder, displaying indexes for files or folders subordinate to the selected folder, either in a first mode, for displaying indexes for files or folders that belong directly to the selected folder, or in a second mode, for displaying indexes for all image files of a predetermined type that are subordinate to the selected folder, and for accepting an operation for a file or a folder included in the displayed index.

## Description

### Technical Field

The present invention relates to an image storage apparatus and a program for storing image files.

### Background Art

Recently, as the use of digital cameras has spread, image files such as those for digital photos are widely employed. Since image files hold a larger amount of data than text files, etc., the capacity of a removable memory to which a digital camera outputs image files tends to be insufficient. In order to resolve this problem, a portable image viewer has been developed (see, for example, non-patent document 1).

However, according to the portable image viewer described in non-patent document 1, since all the files stored in a removable memory are written to a built-in hard disk while maintaining a directory tree structure, there is a problem with an operation performed for an image that is deeply located, relative to the directory hierarchy. In this specification, the structure of a directory in which the individual nodes of a tree structure correspond to folders or files is called a directory tree structure.

Further, since the identification of contents by file name is more difficult for image files, such as digital photos, than for text files, etc., performing a search is difficult unless the stored files are arranged using such as folders. To resolve this problem, a digital photo management tool has been developed (see, for example, non-patent document 2).

As programs for managing files stored on a storage medium, such as a hard disk, a file system is known that is generally provided as part of an OS, and an application, such as the digital photo management tool described in non-patent document 2, that manages only a specific type of files. According to the file system that employs directories having a tree structure, lists of files and folders that belong to a current directory are displayed, and the operations performed for the files and folders on the lists are accepted. According to the application described in non-patent document 2, image files can be grouped, regardless of the hierarchical structure of the directories, and a list of image files can be displayed for each group and an operation for a displayed image file can be accepted, so that the management and operation of the image file can be easily performed.

However, a directory entry for an image file that is managed by the application described in non-patent document 2 can not easily be understood by referring to the GUI for the application, and thus, it is difficult for the image file to be accessed using the file system of the OS by tracing the hierarchy of the directory step by step. Therefore, in order to access the image file managed by the application described in non-patent document 2, the application must be started each time.

Further, since the digital photo management tool described in non-patent document 2 fetches only image files, backing up the entire removable memory is not enabled.

Furthermore, the application described in non-patent document 2 searches image files by tracing the directories each time a list of image files is displayed. Therefore, a problem with the application described in non-patent document 2 is that it requires time to display the list.
(Non-patent Document 1)
   Nippon Pola Digital 20GBHDD 1.8 Type Liquid Crystal Mounted Portable Image Viewer, Impress Corp., September 25, 2002, [Searched on December 18, 2002], Internet <URL: http://www.watch.impress.co.jp/pc/docs/2002/0925/npola.htm>
(Non-patent Document 2)
   iphoto, Apple Computer Inc., 2002, [Searched on December 18, 2002], Internet <URL: http://www.apple.co.jp/iphoto>

### Disclosure of the Invention

### (Problems That The Invention Is To Solve)

A first objective of the present invention is to provide an image storage apparatus that is superior in the operation of image files, and a program therefor.

A second objective of the present invention is to provide an image storage apparatus that can back up the entire storage medium and is superior in the operation of image files, and a program therefor.

A third objective of the present invention is to provide an image storage apparatus that can browse image files within a short period of time, and a program therefor.

### (Means For Solving The Problems)

To achieve the first objective, an image storage apparatus includes:
storage means;
selection means for selecting a folder in the storage means; and
file operation means, for, in accordance with the selected folder,
displaying indexes for files or folders subordinate to the selected folder, either in a first mode, for displaying indexes for files or folders that belong directly to the selected folder, or in a second mode, for displaying indexes for all image files of a predetermined type that are subordinate to the selected folder, and for accepting an operation for a file or a folder included in the displayed index. In the first mode, since the indexes for the files or folders that belong directly to the folder are displayed, the file is searched for and manipulated, while the tree structure of directories can be traced hierarchically. In the second mode, since the indexes for all the image files of a predetermined type that are subordinate to the folder are displayed, the image files present at multiple depths in the directories can be viewed. In accordance with the selected folder, the first mode and the second mode are changed automatically, so that files can be easily browsed in consonance with the usage of the folder. Therefore, according to the image storage apparatus, the image file operations can be improved. Specifically, for example, when a folder is prepared for each day photo image files are created, and when a folder having a higher precedence is created to which folders for all the days photographs are taken during a trip are subordinated, only the index for the folder having the higher precedence need be displayed in the second mode for all the photo image files for the trip to be displayed on a list. Further, when a folder having an even higher precedence is created to which trip folders for individual destinations are subordinated, and when the index of the folder having a higher precedence than the trip folders for the individual destinations is displayed in the first mode, a list of photo image files can be displayed for each trip destination. In this case, as the precedence of the folders is lowered, the display of the index is automatically changed from the first mode to the second mode, so that the operation for the files can be easily performed.

To achieve the first objective, it is preferable that the image storage apparatus further include:
setup means for setting, for each folder in the storage means, either the first mode or the second mode to display the index of the file or the folder that is subordinated to the selected folder. Since means is provided for setting, for each folder, the first mode or the second mode to display the index of the folder, the efficiency of the file operation can be increased.

To achieve the first objective, it is preferable that the file operation means of the image storage apparatus display, as an index for a file that is subordinated to the selected folder, a list of thumbnail images of the image files that are subordinated to the selected folder and are stored in the storage means. Since the list of thumbnail images is displayed as an index, the efficiency of the operation for the image files can be even more increased.

To achieve the first objective, it is preferable that the image storage apparatus further include:
input means for entering, in the storage means, an image file that is stored on an external storage medium, while directly subordinating the image file to a first folder for which an index is displayed in the first mode, and for entering, in the storage means, all the image files stored on the external storage medium, while maintaining a directory tree structure for the external storage medium and placing all the subordinated image files in a second folder for which an index is displayed in the second mode. Since all the files stored on the external storage medium are entered in the storage means and are subordinated to a predetermined folder, while the directory tree structure of the external storage medium is maintained, all the files stored on the storage medium can be completely backed up. Furthermore, the image files that are located at multiple depths in folders and that are completely backed up can be browsed by displaying the indexes in the second mode. Further, when these image files are directly subordinated to the folder for which the index is displayed in the first mode and are stored in the storage means, these image files can all be viewed at the same time in the first mode. Since the target to be displayed on the list in the first mode is only one in a current directory, the index can be displayed more quickly than in the second mode. Therefore, the image files that are directly subordinated to the first folder and that are stored in the storage means can be quickly displayed as a list.

To achieve the second objective, an image storage apparatus includes:
storage means;
selection means for selecting an arbitrary folder subordinate to a first folder in the storage means;
input means for entering, in the storage means, an image file stored on an external storage medium while directly subordinating the image file to the folder selected by the selection means, and for entering, in the storage means, all the files stored on the external storage medium, while maintaining a directory tree structure of the external storage medium and subordinating the files to a second folder in the storage means; and
file operation means for displaying indexes for all the files that are stored in the storage means and that are directly subordinated to the arbitrary folder, and for accepting an operation for files included in the indexes that are displayed. All the files stored on the external storage means are entered in the storage means and are subordinated to the second folder in the storage means, while the directory tree structure of the storage medium is maintained, so that all the files stored on the storage medium can be completely backed up. Further, since image files stored on the external storage medium are entered in the storage medium while directly subordinated to the folder selected by the selection means, the indexes for all the files directly subordinated to the folder are displayed, and the operation for the files included in the displayed indexes is accepted and the efficiency of the operation for the image files is increased.

To achieve the second objective, it is preferable that the file operation means of the image storage apparatus display, as an index for an image file that is stored in the storage means and is directly subordinated to an arbitrary folder, a list of thumbnail images for all the image files that are stored in the storage means and that are directly subordinated to the arbitrary file. Since the list of thumbnail images is displayed as an index, the efficiency of the operation for the image files is increased.

To achieve the second objective, it is preferable that the input means of the image storage apparatus store, in the storage means, all the image files of a predetermined type stored on the external storage medium, while directly subordinating the image files to the folder selected by the selection means. Since all the image files of a predetermined type stored on the external storage medium are entered in the storage means and are directly subordinated to the folder selected by the selection means, the labor required each time to select an image file stored on the external storage medium and to enter the image file in the storage means can be reduced.

To achieve the second objective, it is preferable for the image storage apparatus that the first folder not be subordinated to the second folder. When the first folder is not subordinated to the second folder, user confusion caused by a single file being subordinated to multiple different folders can be prevented.

To achieve the second objective, it is preferable for the image storage apparatus that the second folder not be subordinated to the first folder. When the second folder is not subordinated to the first folder, user confusion caused by a single file being subordinated to multiple different folders can be prevented.

To achieve the second objective, an image storage program functions a computer as:
storage means;
selection means for selecting an arbitrary folder subordinated to a first folder in the storage means;
input means for entering, in the storage means, an image file stored on an external storage medium while placing the image file directly under the folder selected by the selection means, and for entering, in the storage means, all the files stored on the external storage medium, while maintaining a directory tree structure of the external storage medium and placing the files subordinate to a second folder in the storage means that is not subordinate to the first folder; and
file operation means for displaying indexes for all the files that are stored in the storage means and belong directly to the arbitrary folder, and for accepting an operation for files included in the displayed indexes.

To achieve the third objective, an image storage apparatus includes:
storage means;
selection means for selecting a folder in the storage means;
collection means for searching for image files of a predetermined type subordinated to a predetermined folder, and for storing the image files thus found in the storage means, while placing the image files directly under the folder selected by the selection means; and
file operation means for displaying indexes for all the files that are stored in the storage means and that belong directly to an arbitrary folder, and for accepting an operation for files included in the displayed indexes. When the image files of a predetermined type subordinated to a predetermined folder are stored while being subordinated to the folder selected by the selection means, and when the indexes for all the files that belong directly to the selected folder are displayed, the image files of a predetermined type located at multiple depths can be browsed in a predetermined folder. Since targets to be displayed as a list are only those in a current directory, a search for image files performed by tracing the directories is not required each time a list display is performed, so that the time required for a list display can be reduced. Therefore, according to the image storage apparatus, the image files can be browsed within a short period of time.

To achieve the third objective, it is preferable that the collection means of the image storage apparatus rename the image file that is found as a file having a name that represents the time the image file was created. When the image file is renamed and has a file name that represents the creation time, the creation time for the image file can be obtained in accordance with the file name.

To achieve the third objective, it is preferable that the selection means of the image storage apparatus be capable of selecting only a folder not subordinated to the predetermined folder. When selection of a folder subordinated to the predetermined folder is prohibited, user confusion caused by a single file being subordinated to multiple different folders can be prevented.

To achieve the third objective, it is preferable that the selection means of the image storage apparatus be capable of selecting only a folder not subordinated to the predetermined folder. When selection of a folder subordinated to the predetermined folder is prohibited, user confusion caused by a single file being subordinated to multiple different folders can be prevented.

To achieve the third objective, it is preferable that the file operation means of the image storage apparatus display, as indexes for image files that are stored in the storage means and belong directly to an arbitrary folder, a list of thumbnail images of all the image files that are stored in the storage means and belong directly to the arbitrary folder. Since the list of thumbnail images is displayed as an index, the operation performed for image files is increased.

To achieve the third objective, an image storage program performs such functions of a computer as:
storage means;
selection means for selecting a folder in the storage means;
collection means for searching for image files of a predetermined type subordinated to a predetermined folder, and for storing, in the storage means, image files thus found that belong directly to the folder selected by the selection means; and
file operation means for displaying indexes for all the files that are stored in the storage means and belong directly to an arbitrary folder, and for accepting an operation for files included in the displayed indexes.

The functions of multiple means included in the present invention are provided by hardware resources whose functions are designated by the configurations, by hardware resources whose functions are designated by programs, or by the combination of them. Furthermore, the functions of these multiple means are not limited to those provided by hardware resources that are physically independent.

Further, the present invention can be specified as an invention for a recording medium on which a program is recorded, and as an invention for a method.

### Brief Description of the Drawings

Fig. 1 is a schematic diagram showing a display in a first mode and a display in a second mode;
Fig. 2A is a schematic diagram showing an image storage apparatus, and Fig. 2B is a block diagram showing the hardware configuration of the image storage apparatus;
Fig. 3 is a data flow diagram for an image storage program;
Fig. 4 is a schematic diagram showing a screen for setting a mode for a folder;
Fig. 5 is a schematic diagram showing a screen for selecting a folder;
Fig. 6 is a data flow diagram showing a file input process;
Fig. 7 is a schematic diagram showing a screen for selecting a first folder;
Fig. 8 is a schematic diagram showing a directory tree structure in storage means;
Fig. 9 is a schematic diagram showing the directory tree structure in the storage means;
Fig. 10 is a schematic diagram showing a directory tree structure in external storage means;
Fig. 11 is a schematic diagram showing the directory tree structure in the storage means;
Fig. 12 is a schematic diagram showing a directory tree structure in an external storage means;
Fig. 13A is a schematic diagram showing a layout designation file, and Fig. 13B is a schematic diagram showing the results obtained by printing based on the layout designation file;
Fig. 14 is a schematic diagram showing a directory tree structure in storage means;
Fig. 15 is a data flow diagram showing an image storage program;
Fig. 16A is a schematic diagram showing a screen for entering an instruction, and Fig. 16B is a schematic diagram showing a screen for selecting a folder;
Fig. 17A is a schematic diagram showing a screen for selecting a folder, and Fig. 17B is a schematic diagram showing a screen for displaying indexes;
Figs. 18A and 18B are schematic diagrams showing screens for display indexes;
Fig. 19 is a schematic diagram showing a screen for accepting an operation for a file;
Fig. 20 is a schematic diagram showing a directory tree structure in storage means;
Fig. 21 is a data flow diagram showing an image storage program;
Fig. 22 is a schematic diagram showing a screen for selecting a folder;
Fig. 23 is a schematic diagram showing a directory tree structure in storage means;
Fig. 24A is a schematic diagram showing a screen for instructing the display of indexes, and Fig. 24B is a schematic diagram showing a screen for selecting a folder;
Figs. 25A and 25B are schematic diagrams showing screens for displaying indexes; and
Fig. 26 is a schematic diagram showing a screen for displaying indexes.

### Best Modes for Carrying Out the Invention

### (First Embodiment)

The modes of an image storage apparatus and program therefor that achieve the first objective will now be described based on embodiments. In the explanation for a first embodiment, an image file (hereinafter referred to as an "Exif file") that conforms to an Exif file form is regarded as an image file of a predetermined type cited in the claims. The Exif file form is a file form for a digital still camera, and includes an attached information area for storing attached information related to a digital image, such as the day and time photographed, the exposure and shutter speed, an image data area for storing digital images, and a thumbnail image data area for storing thumbnail images of digital images stored in the image data area.

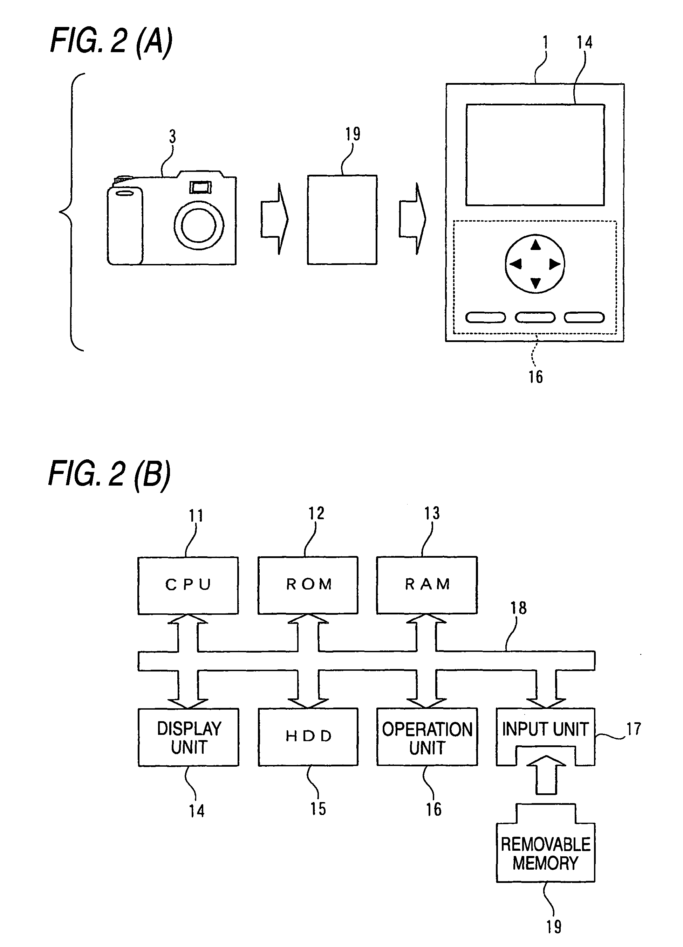

Fig. 2A is a schematic diagram showing the external appearance of an image storage apparatus 1 according to the first embodiment of the present invention, and Fig. 2B is a block diagram showing the hardware configuration of the image storage apparatus 1. An image file created by a digital still camera 3 is stored in a removable memory 19 by the digital still camera 3, and the removable memory 19 is removed by a user and is loaded into the card slot of the image storage apparatus 1. Thus, the image file created by the digital camera 3 can be input to the image storage apparatus 1. The image storage apparatus 1 includes a CPU 11, a ROM 12, a RAM 13, a display unit 14, a hard disk drive (HDD) 15, an operation unit 16 and an input unit 17, all of which are mutually connected by a bus 18.

The CPU 11 controls the entire image storage apparatus 1 by executing programs stored in the ROM 12 and on the HDD 15. Further, by executing an image storage program stored on the HDD 15, the CPU 11 functions as selection means, collection means, file operation means, setup means and input means. The ROM 12 is a memory in which programs and data required to operate the CPU 11 are stored in advance. The RAM 13 is a memory in which various programs and data are temporarily stored. These programs and data may be read from the removable memory 19 and input, or when communication means connectable to a network is prepared, these programs and data may be downloaded from a predetermined server via the network and input. When an interface, such as USB or Bluetooth, with a personal computer has been set up the programs and data may be input from the personal computer via the interface.

The display unit 14 includes a CRT or a LCD (Liquid Crystal Display) and a display controller. The display unit 14 is controlled by the CPU 11, and displays digital images stored in the Exif file that is received, for example, from the removable memory 19. The display unit 14 also functions as file operation means, setup means and input means, and displays a screen for selecting a folder, a screen for displaying an index for a file or a folder, a screen for setting a mode for each folder, a screen for selecting a first folder and a screen for accepting an operation for a file.

The HDD 15 includes a hard disk and a hard disk controller. The HDD 15 functions as storage means, and stores an operating system (OS), an image storage program, image files such as Exif files and various data.

The operation unit 16 includes press button switches: a 4-way button, used to move a cursor displayed on the display unit 14 in every direction, or to select a button to be highlighted on a display, or to select a folder or a thumbnail image; an [OK] button, used to enter a selection; a [cancel] button, used to cancel a selection and return to the upper screen or the upper folder; and a [menu] button, used to display various menus. The operation unit 16 functions as selection means, file operation means, setup means and input means, and is used to select an item displayed on the display unit 14.

The input unit 17 includes a card slot and a memory controller. The input unit 17 functions as input means, and under the control of the CPU 11, reads a file from the removable memory 19 loaded in the card slot, or writes a file to the removable memory 19. The removable memory 19 is an external memory medium detachable from the input unit 17, and specifically, for example, is a card type flash memory detachable from a digital still camera. The removable memory 19, such as a flash memory of a card type, a flexible disk, an MO, a CD-R or a DVD, may be employed as an external storage medium, and data on the external storage medium may be written to the HDD 15 via the input unit 17. Or a non-volatile memory incorporated in the digital camera 3, for example, may be employed as an external storage medium, and data may be written from that memory to the HDD 15 via the input unit 17.

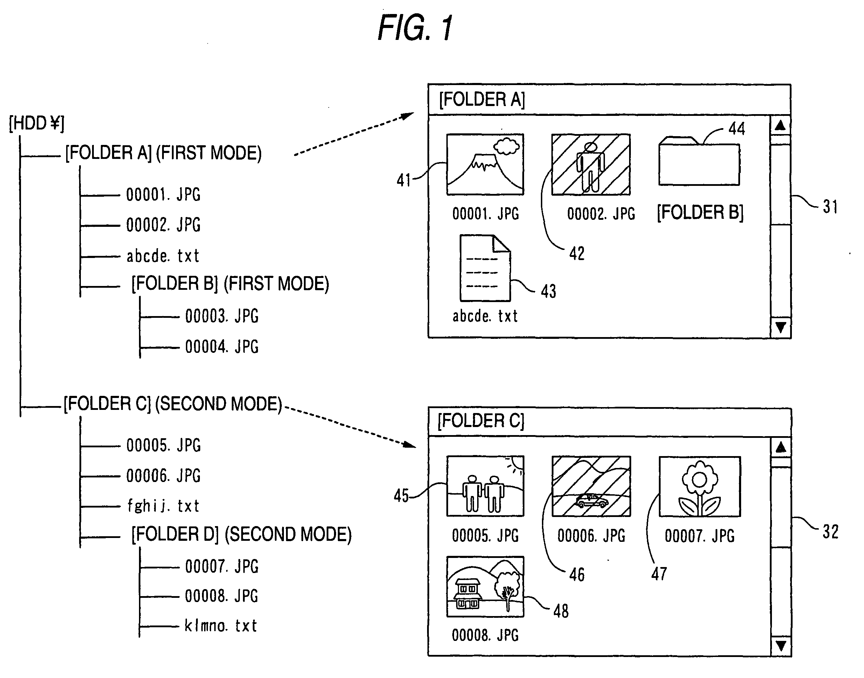

Fig. 1 is a schematic diagram showing a directory tree structure for the HDD 15, an index display screen 31 on which indexes for files or folders that belong directly to a folder A are displayed, and an index display screen 32 on which indexes for all the Exif files subordinate to a folder C are displayed. In the directory tree structure shown in Fig. 1, for example, a node with [], like [folder A], corresponds to a folder, and a node without [], like 00001.JPG, corresponds to a file. The extension for an Exif file name is "JPG".

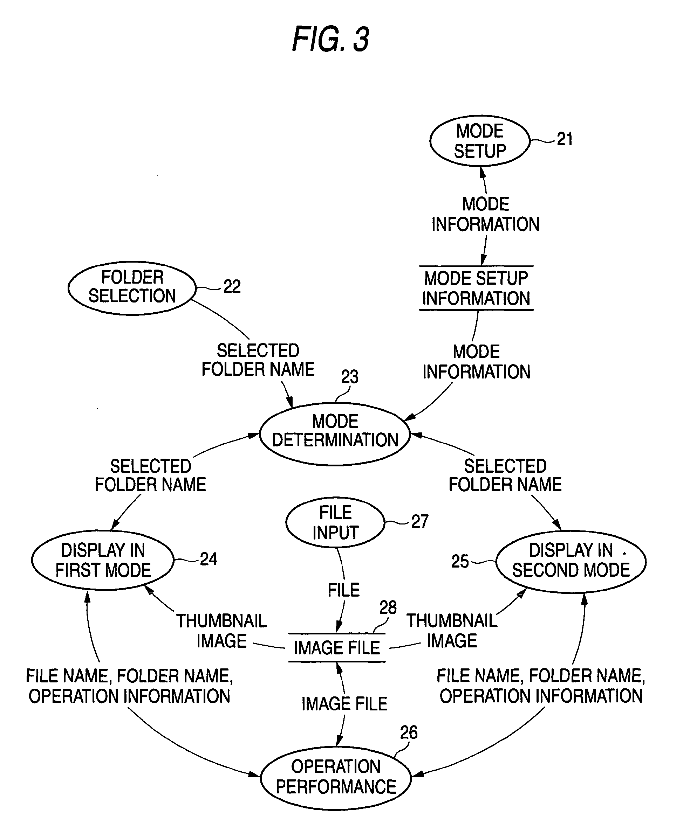

Fig. 3 is a data flow diagram for an image storage program. As shown in Fig. 3, the image storage program permits the image storage apparatus 1 to perform a mode setup process 21, a folder selection process 22, a mode determination process 23, a display process 24 in a first mode, a display process 25 in a second mode, an operation performance process 26 and a file input process 27.

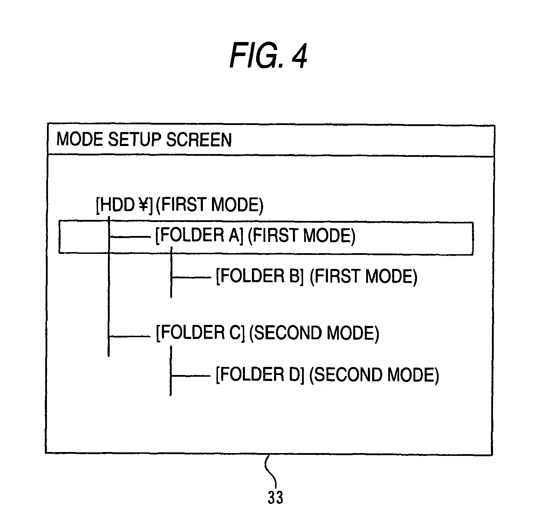

The mode setup process 21 is a process for setting, for each folder on the HDD 15, the first mode or the second mode to display the indexes for files or folders subordinated to a selected folder. The mode setup process 21, for example, displays a mode setup screen 33 in Fig. 4 on the display unit 14, and when a folder name and a mode are selected by a user, designates the selected mode for the selected folder. Specifically, for example, the mode setup process 21 obtains via the OS information for specifying the directory tree structure on the HDD 15, and displays folder names included in the obtained information hierarchically in accordance with the tree structure shown in Fig. 4. On the right side of the individual folder names, the modes currently set for the pertinent folders are obtained from mode setup information that will be described later and are displayed with (). The user moves a cursor to a target folder name, and presses the right end or left end of the 4-way button to change the mode displayed in (), so that the user can select a mode to be set for the folder corresponding to the folder name. When the [OK] button is pressed, the mode setup process 21 stores, on the HDD 15, the folder name and the mode information representing the selected mode, in correlation with each other. As a result, the mode can be set for each folder. When the first mode or the second mode to display the index of the folder has been set for each folder, the user can choose, for each folder and in consonance with a purpose, whether files stored at various locations are to be displayed as a list or only files that belong directly to the selected folder are to be displayed. Therefore, an operation performed for files can be increased.

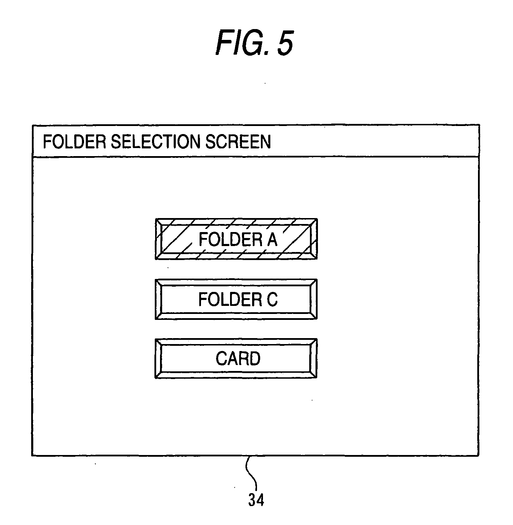

The folder selection process 22 is a process for selecting a folder. Specifically, for example, when a user issues a folder selection instruction through a predetermined manipulation, the folder selection process 22 displays a folder selection screen 34 in Fig. 5 on the display unit 14. When the user selects a target button to be highlighted and presses the [OK] button, the folder selection process 22 accepts, as a selected folder, a folder that corresponds to the button that is highlighted when the [OK] button is pressed. In Fig. 5, a [folder A] button corresponds to a [folder A] folder, a [folder C] button corresponds to a [folder C] folder, and a [card] button corresponds to the removable memory 19. When the selection of a folder is accepted, the folder selection process 22 outputs the name of the selected folder to the mode determination process 23.

The mode determination process 23 is a process for determining, in accordance with the file name output by the folder selection process 22, whether the index should be displayed in the first mode or the second mode. Specifically, for example, when the folder name is output by the folder selection process, the display process 24 in the first mode, or the display process 25 in the second mode, the mode determination process 23 obtains, from the mode setup information, mode information consonant with the folder name, and when the first mode is designated in the obtained mode information, determines that the index should be displayed in the first mode, and instructs the display process 24 in the first mode to perform a process. When the second mode is designated, the mode determination process 23 instructs the display process 25 in the second mode to perform a process. When, for example, a [folder A] folder is selected, the mode determination process 23 instructs the display process 24 in the first mode to perform the process, and when a [folder C] folder is selected, instructs the display process 25 in the second mode to perform the process.

The display process 24 in the first mode is a process for displaying the indexes of files or folders that belong directly to a folder. Further, the display process 24 in the first mode accepts an operation for a file or a folder included in the displayed indexes. Specifically, for example, when a folder name is output by the mode determination process 23, the display process 24 in the first mode obtains, from the OS, the file names and the folder names for files that are stored in the HDD 15 and belong directly to the folder corresponding to the folder name. And for an Exif file among the files corresponding to the obtained file names, the display process 24 in the first mode displays a list of thumbnail images stored in the Exif file on an index display screen, for files other than the Exif file, displays a list of file icons, and for folders, displays a list of folder icons. As a result, indexes are displayed. It should be noted that thumbnail images may be displayed for image files other than Exif files. When the list of thumbnail images is displayed as an index, a search for an image can be easily performed, and an operation for an image file is improved.

The index display screen 31 in Fig. 1 is an index display screen appearing when a [folder A] folder is selected. As shown in Fig. 1, "00001.JPG", "00002.JPG" and "abcde.txt" are present as files that belong directly to the [folder A] folder, and a "folder B" is present as a folder that belongs directly to the [folder A] folder. In Fig. 1, "00003.JPG" and "0004.JPG" are Exif files that are subordinated to the [folder A] folder but do not belong directly to the [folder A] folder. The display process 24 in the first mode displays, as shown on the index display screen 31, the list of thumbnail images 41 and 42 for "0001.JPG" and "0002.JPG", which are directly belonging files, a file icon 43 representing "abcde.txt", which is a file other than the directly belonging Exif files, and a folder icon 44 representing "folder B", which is a directly belonging folder. That is, for a file or a folder that is subordinated to a folder but does not belong directly to the folder, a thumbnail image, a file icon or a folder icon for the file or the folder is not included in an index.

Further, the display process 24 in the first mode accepts an operation for a file or folder included in the displayed index. Specifically, for example, when a thumbnail image is selected on the index display screen, and when the [OK] button is pressed in this state, the display process 24 in the first mode accepts this operation as an operation for displaying a digital image that is stored in an Exif file corresponding to the selected thumbnail image. After accepting the display operation, the display process 24 in the first mode outputs to the operation performance process 26 the file name of the Exif file that corresponds to the selected thumbnail image and operation information indicating "display". Further, when the "menu" button is pressed while the thumbnail image is selected, the display process 24 in the first mode displays an operation selection menu to select an available operation for an Exif file that corresponds to the selected thumbnail image. Then, an operation other than the display operation is to be accepted. Operation choices displayed on the operation selection menu are, for example, copy, rename, move and delete. The same process is performed when a file icon indicating a file other than an Exif file has been selected, and operation choices available for the pertinent file are displayed on the menu. An operation for a folder is accepted only on the operation selection menu. Operation choices displayed are, for example, create new folder, copy folder, rename folder and delete folder.

When the [OK] button is pressed while the folder icon is selected, the display process 24 in the first mode accepts, as a next selected folder, a folder that corresponds to the selected folder icon, and outputs the selected folder name to the mode determination process 23. When the [Cancel] button is pressed, the display process 24 in the first mode accepts a folder having a higher precedence as the next selected folder, regardless of the presence/absence of a selection, obtains the name of the folder having the higher precedence from the OS, and outputs the folder name to the mode determination process 23. Upon receiving the folder name, the mode determination process 23 again determines, in accordance with the mode designated for the folder corresponding to the pertinent folder name, whether a display should be provided in the first mode or the second mode, and in accordance with the determination results, instructs the display process 24 in the first mode or the display process 25 in the second mode to perform the process. Therefore, in the first mode, files can be searched and operated by hierarchically tracing the directory tree structure. These processes can be performed in the same manner when the [Cancel] button is pressed during the display process 25 in the second mode.

The display process 25 in the second mode is a process for displaying the indexes for all the Exif files that are subordinated to a folder. Further, as well as the display process 24 in the first mode, the display process 25 in the second mode accepts an operation for a file.

The index display screen 32 in Fig. 1 is an index display screen that appears when a [folder C] folder is selected. As shown in Fig. 1, "00005.JPG" and "00006.JPG" are present as Exif files subordinated to the [folder C] folder, and a "folder D" is present as a folder belonging directly to the [folder C] folder. "00007.JPG" and "00008.JPG" are Exif files that are subordinated to the [folder C] folder but do not belong directly to the [folder C] folder. As shown on the index display screen 32, the display process 25 in the second mode displays the list of thumbnail images 45, 46, 47 and 48 for "00005.JPG" and "00006.JPG", which are directly belonging Exif files, and "00007.JPG" and "00008.JPG", which are not directly belonging but are subordinated Exif files. That is, the display process 25 in the second mode includes in an index thumbnail images for all the subordinate Exif files, and does not include in an index folder icons and file icons for files other than Exif files. Therefore, in the second mode, Exif files can be browsed at multiple depths in the directory.

The operation performance process 26 is a process for performing an accepted operation. When the display process 24 in the first mode or the display process 25 in the second mode outputs a file name or a folder name and operation information, the operation performance process 26 performs the operation, designated by the operation information, relative to a file consonant with the file name or a folder consonant with the folder name. For example, when the operation information is "display", an Exif file consonant with the pertinent file name is read from the HDD 15, and a digital image held in the Exif file is displayed on the display unit 14.

The file input process 27 is a process for writing to the HDD 15 an Exif file that is stored in the removable memory 19, while locating the Exif file directly subordinate to a first folder for which the index is displayed in the first mode, and for also writing to the HDD 15 all the files stored in the removable memory 19, while maintaining the directory tree structure of the removable memory 19 and locating the files directly subordinate to a second folder for which the index is displayed in the second mode.

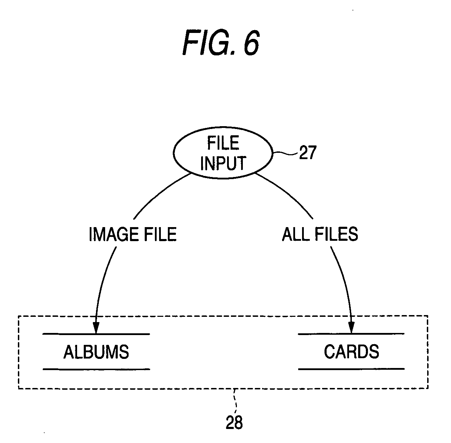

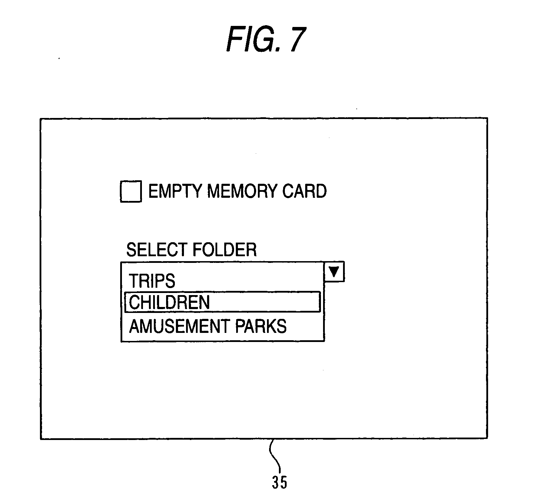

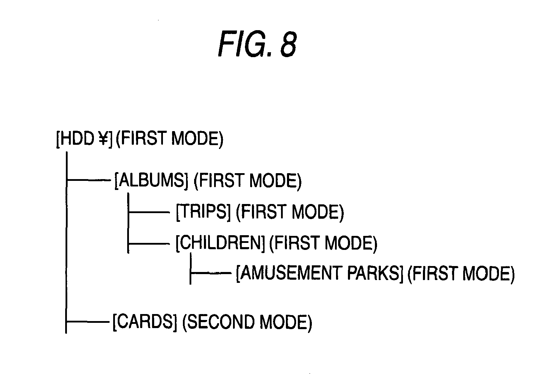

Fig. 6 is a data flow diagram for more specifically explaining the file input process 27. Data dictionaries, "Alubums" and "Cards" in Fig. 6, correspond to a data dictionary 28 depicted as an "image file" in Fig. 3. The file input process 27 is initiated when a user enters a file input instruction while the removable memory 19 is loaded in the input unit 17. When execution is specifically instructed, first, the file input process 27 displays a first folder selection screen 35 in Fig. 7 on the display unit 14. Among the folders under the [Albums] folder, the folder names of folders for which the first mode is designated are displayed as choices on a dropdown list on the first folder selection screen 35. Assume, for example, that the directory tree structure on the HDD 15 before a file is input is the structure shown in Fig. 8. In this case, on the dropdown list on the first folder selection screen 35, "trips", "children" and "amusement parks" are displayed as shown in Fig. 7. When the user moves a cursor to a target folder name on the first folder selection screen 35, and presses the [OK] button, a folder consonant with the folder name whereat the cursor is positioned when the [OK] button is pressed is accepted as a first folder. When the first folder has been accepted, the file input process 27 enters all the Exif files stored in the removable memory 19, while placing these files directly under the selected folder.

Furthermore, the file input process 27 writes to the HDD 15 all the files stored in the removable memory 19, while maintaining the directory tree structure of the removable memory 19 and placing the files subordinate to a second folder for which the index is displayed in the second mode. It should be noted that in the explanation for the first embodiment, an example wherein the [Cards] folder is always fixed as the second folder is employed.

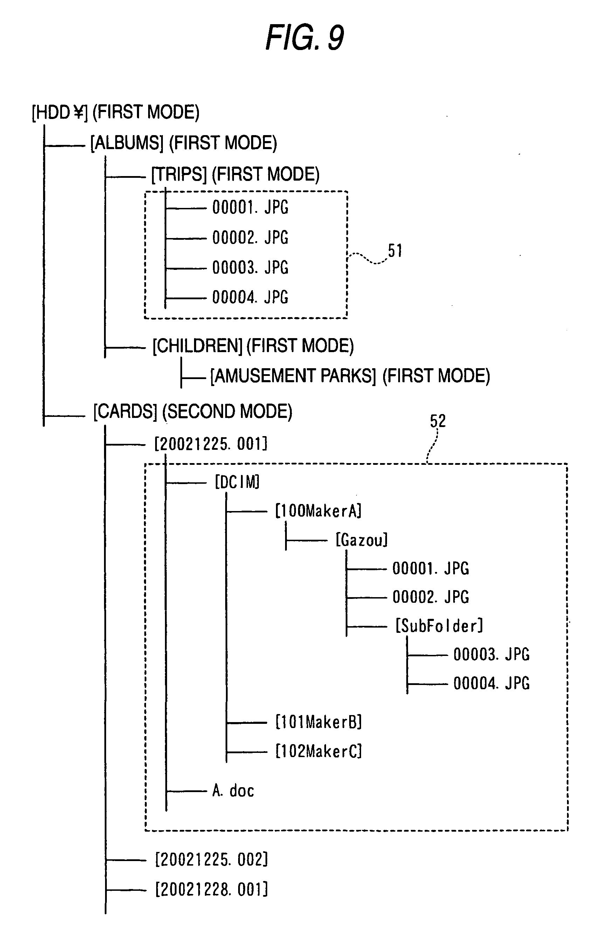

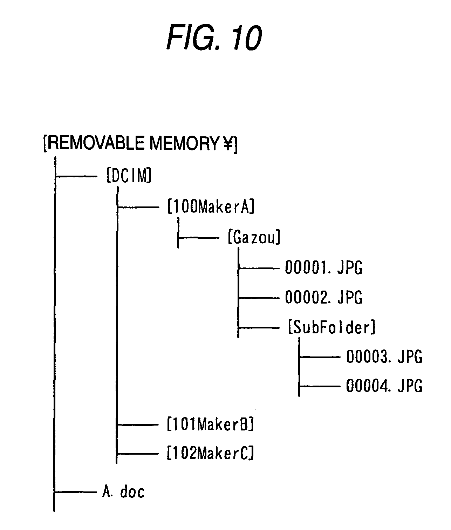

The tree structure on the HDD 15 after the input process has been performed is shown in Fig. 9. Assume, for example, that the directory tree structure of the removable memory 19 is the structure shown in Fig. 10. As shown in Fig. 10, Exif files 00001.JPG and 00002.JPG and Exif files 00003.JPG and 00004.JPG are stored in the removable memory 19, respectively and directly belonging to different folders. When "trips" is selected as the first folder, the file input process 27 locates these four Exif files directly under the "trips" folder, as indicated by a broken line 51 in Fig. 9. At this time, since "A.doc" is not an image file, this file is not stored as directly belonging to the first folder. As a result, the image file is stored on the HDD 15 as directly belonging to the first folder for which the index is displayed in the first mode. When multiple image files are stored on the HDD 15 while being located directly under a folder for which the index is displayed in the first mode, these image files can all be viewed at the same time in the first mode. Since the targets to be displayed as a list in the first mode are those in the current directory, the index can be displayed more quickly than in the second mode. Therefore, image files that are stored on the HDD 15 and belong directly to the first folder can be quickly displayed as a list.

Further, directly under the [Cards] folder, which is the second folder, the file input process 27 prepares a folder having a name consisting of a process execution date and a serial number. The serial number is reset to 1 when the date is changed, and is incremented by one each time reading from the removable memory 19 is instructed. In the example shown in the drawing, [20021225.001], [20021225.002] and [20021228.001] are folders that have been created. When the folders are created, all the files stored in the removable memory 19 are entered directly under the created folders while the tree structure is maintained. An area enclosed, indicated by a broken line 52, in Fig. 9 matches the directory tree structure of the removable memory 19 in Fig. 10. Since all the files stored in the removable memory 19 are written to the HDD 15 while the directory tree structure of the removable memory 19 and the files are subordinated to predetermined folders, all the files stored in the removable memory 19 can be completely backed up. In addition, as for Exif files located in folders at multiple depths that are fully backed up, these files can be viewed by displaying the indexes in the second mode.

In the first embodiment, all the Exif files stored in the removable memory 19 have been stored as directly belonging to the first folder; however, a user may select Exif files to be stored. Further, the folder of the removable memory 19 may be selected, and only an Exif file that is stored while directly belonging to the selected folder or being subordinated to the selected folder may be stored.

According to the above described image storage apparatus 1 for the first embodiment of the present invention, since the first mode and the second mode are automatically changed in accordance with the selected folder, files can be easily browsed in accordance with the usage of a folder. Therefore, according to the image storage apparatus 1, the operation for the Exif file can be improved.

In the first embodiment, it should be noted that a list of thumbnails is displayed as an index; however, a list of file names may be displayed as an index.

Further, in the first embodiment, an image file having the Exif file form has been explained as an example for the image file of a predetermined type. However, the image file of a predetermined type may be an image file having another form, such as a JPEG form, a TIFF form or a bitmap form. In this case, the thumbnail image must be stored separately in correlation with the form.

### (Second Embodiment)

The mode for an image storage apparatus and a program therefor that achieve the second objective will now be described based on one embodiment. No explanation will be given for the sections that are substantially the same as those in the first embodiment.

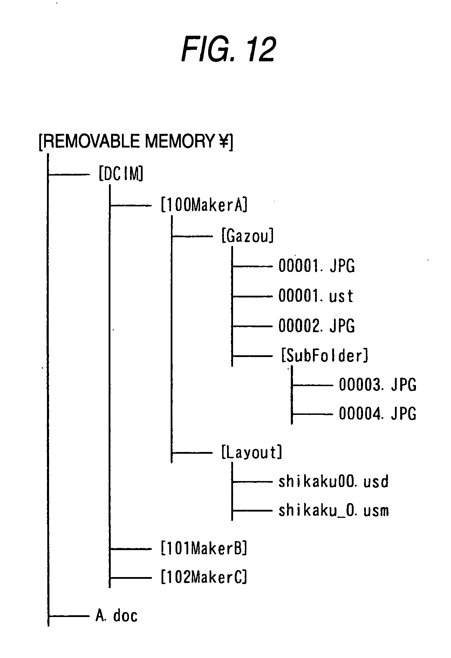

Fig. 12 is a schematic diagram showing an example directory tree structure for a removable memory 19. In Fig. 12, for example, nodes with [], such as [Gazou], correspond to folders, and nodes without [], such as 00001.JPG, correspond to files. When one removable memory 19 is employed by multiple digital still cameras made by different makers, independent folders are created for the individual makers directly under a [DCIM] folder, and image files obtained by the digital still cameras, etc., are stored under the folders for the pertinent makers. In the example shown in the drawing, [100MakerA], [101 MakerB] and [102MakerC] represent folders for the individual makers. Files to be stored under the folders for the individual makers will now be described by employing [100MakerA] as an example. A file with the extension usd is a layout designation file. The layout designation file is a file for designating a layout when a digital image is to be displayed or printed, and the details for it will be described later. A file with the extension usm is an index file. The path for the layout designation file is written to the index file. A file with the extension ust is a correlation file. The path for the index file is written to the correlation file, and the same file name as that for a correlated image file is provided for the correlation file.

Assume, for example, that the path for layout designation file shikaku00.usd has been written to index file shikaku_0.usm. When image file 00001.JPG is to be correlated with layout designation file shikaku00.usd, a ust file having file name 00001.ust is created, and path shikaku_0.usm is written to the ust file. As a result, 00001.JPG and shikaku00.usd are correlated with each other.

The directory tree structure under the folder for each maker can be individually determined by the maker. In the case of the [100MakerA] folder, an image file and a correlation file are stored while they belong directly to or are subordinated to the [Gazou] folder, and the layout designation file and the index file are stored while they belong directly to a [Layout] folder.

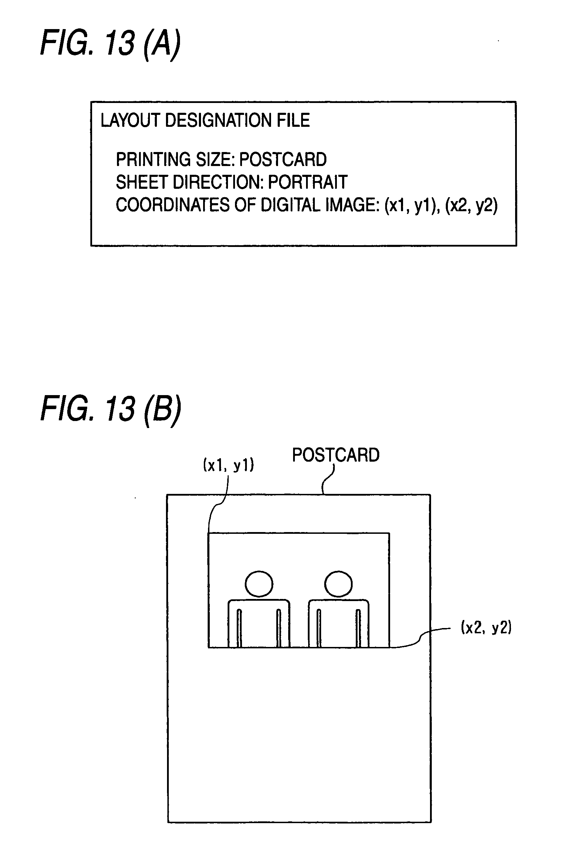

Fig. 13A is a schematic diagram for explaining the layout designation file. The layout designation file defines, using a script, information for designating the size of a printing sheet and position information for locating a digital image on a printing sheet, so that a personal computer or a printer can only interpret the information as a single definition. Specifically, for example, as shown in the drawing, the layout designation file defines a sheet size (e.g., "postcard"), the vertical print orientation of a sheet (e.g., "portrait"), and the coordinates for a digital image (e.g., the upper left coordinates (x1, y1) for a frame and the lower right coordinates (x2, y2) for the frame).

Fig. 13B is a schematic diagram showing the results obtained by printing a digital image based on the layout designation file in Fig. 13A. In the example shown in Fig. 13B, "postcard" is designated as the printing size, and a digital image is printed in a rectangular area specified by (x1, y1) and (x2, y2), in accordance with the coordinate system that employs, as the origin, the upper left corner of a postcard having the vertical print orientation portrait. As a result, the digital image is printed using the layout designated by the layout designation file. The same process is performed when a digital image is displayed on the display screen. In this case, on the display screen, the digital image is displayed in a rectangular area specified by (x1, y2) and (x2, Y2) in an area having a size that is consonant with the area for the designated printing size.

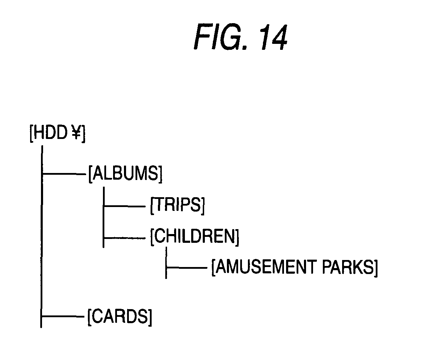

Fig. 14 is a schematic diagram showing the directory tree structure for the HDD 15 before files are stored in the removable memory 19. Represented in the directory tree structure in the example are an [Albums] folder that has been prepared as a first folder on the HDD 15, and a [Cards] folder that has been prepared as a second folder without being subordinated to [Albums]. Also represented is that the [Albums] folder is prepared without being subordinated to the [Cards] folder, and thus, neither the first folder nor the second folder is subordinated to the other. The "trips", "children" and "amusement parks" folders are the folders subordinated to [Albums], which corresponds to the first folder. A [trips] folder and a [children] folder, in which image files are to be classified and stored, are prepared and belong directly to [Albums], and an [amusement parks] folder is prepared and belongs directly to the [children] folder.

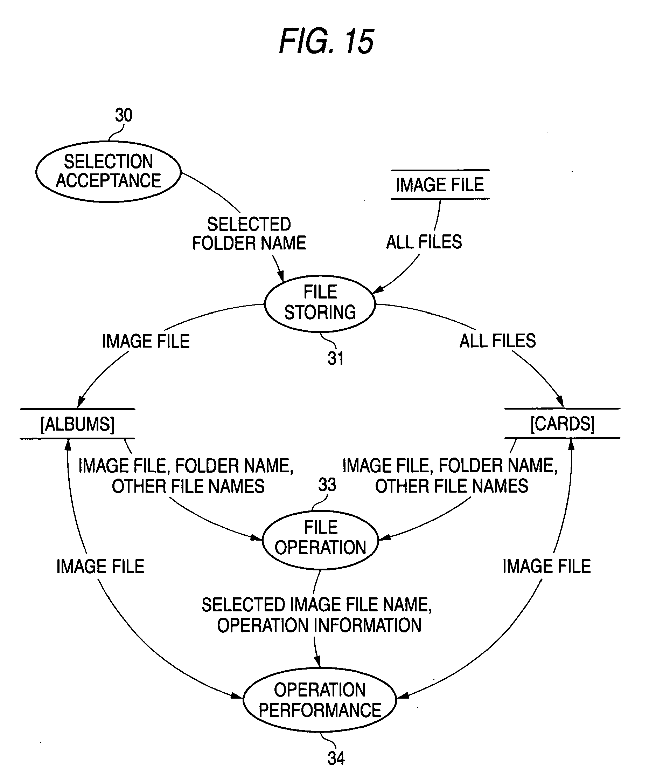

Fig. 15 is a data flow diagram for an image storage program according to the second embodiment. As shown in the drawing, the image storage program permits an image storage apparatus 1, which is a computer, to perform a selection acceptance process 30, a file storage process 31, a file operation process 33 and an operation performance process 34.

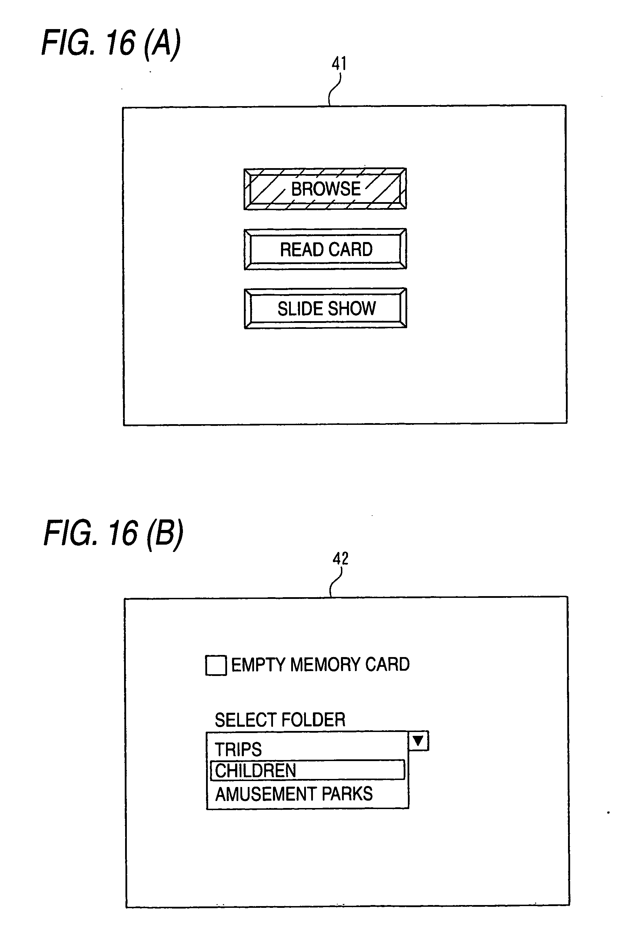

The selection acceptance process 30 is a process for accepting the selection of an arbitrary folder subordinated to the first folder. Specifically, the selection acceptance process 30 is initiated when, for example, a user selects a [read card] button to be highlighted on a screen shown in Fig. 16A, and presses the [OK] button. The selection acceptance process 30 displays a screen shown in Fig. 16B on the display unit 14, and displays, as selection choices on the dropdown list on the screen, the folder names of all the folders that are subordinated to the first folder. In the case shown in Fig. 14, "trips", "children" and "amusement parks" are displayed on the dropdown list. In Fig. 16B, when the user moves the cursor to a target folder name and presses the [OK] button, a folder consonant with the folder name whereat the cursor is positioned when the [OK] button is pressed is accepted as the selected folder. When the selection of the folder has been accepted, the selection acceptance process 30 outputs the selected folder name to the file storage process 31.

The file storage process 31 is a process for writing to the HDD 15 all the image files stored in the removable memory 19, while placing these files directly under the selected folder, and for writing to the HDD 15 all the files stored in the removable memory 19, while maintaining the directory tree structure of the removable memory 19 and locating the files so they are subordinated to the second folder of the HDD 15. Specifically, for example, when the folder name of the selected folder is output, the file storage process 31 enters, directly under the selected folder, all the image files stored in the removable memory 19.

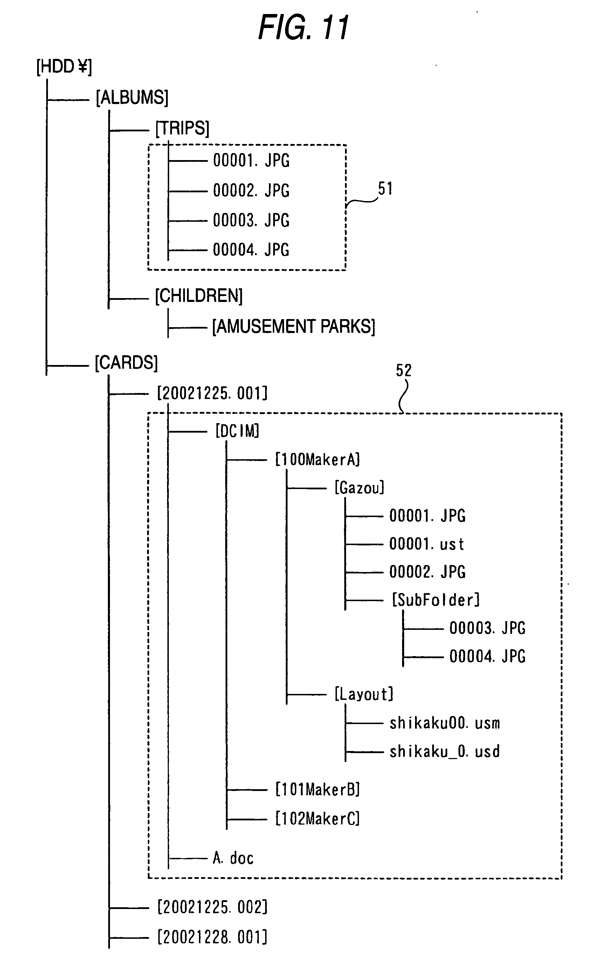

The tree structure for the HDD 15 after the file storage process has been performed is shown in Fig. 11. As shown in Fig. 12, image files 00001 .JPG and 00002.JPG and image files 00003.JPG and 00004.JPG are stored in the removable memory 19, while they belong directly to different folders. When "trips" is selected as a folder, the file storage process 31 holds these four image files directly under the "trips" folder, as indicated by a broken line 51 in Fig. 11. That is, the image files are stored in the HDD 15, directly under the selected folder. When the image files that were stored in the removable memory 19 and respectively and directly belonged to different folders are entered to the HDD 15 directly under a single folder, only one folder need be selected for the image files that were stored in the removable memory 19 and belonged directly to different folders, so that the index that includes the thumbnail images for all of these image files can be displayed. Therefore, the labor required to search for an image file can be reduced, and the capability of the operation can be improved. Further, since the image files belong directly to the selected folder in the HDD 15, the folder to which the image files belong directly can be changed as needed, so that image files can be classified in accordance with the unit for the storage employed by the file storage process 31. Assume, for example, that a user went to an amusement park. When image files recorded at that time are to be moved from the removable memory 19 to the HDD 15, these image files can be entered while collectively belonging directly to the [amusement parks] folder, for example. Further, the file operation process 33, which will be described later, does not include, in an index, image files that do not belong directly to the selected folder. Therefore, since image files are classified into folders and stored, a search for an image file can be easily performed, and the operation capability can be even more improved. In addition, since all the image files are stored on the HDD 15, the labor required to select image files to be stored on the HDD 15 can be reduced.

It should be noted that a user may select image files to be stored, or may select a folder in the removable memory 19, and that all of the image files that belong to the selected folder or are subordinated to the selected folder may be stored.

In addition, directly under the [Cards] folder, which is the second folder, the file storage process 31 creates a folder having a name consisting of a process execution date and a serial number. The serial number is reset to 1 when the date is changed, and is incremented by one each time an instruction to read the removable memory 19 is issued. In the example in the drawing, [20021225.001], [20021225.002] and [20021228.001] are the folders that have been created. After the folders have been created, all the files stored in the removable memory 19 are stored directly under these folders while maintaining the tree structure. Therefore, the area enclosed by a broken line 52 in Fig. 11 matches the directory tree structure of the removable memory shown in Fig. 12. Since the [Cards] folder, which is the second folder, is not subordinated to the [Albums] folder, which is the first folder, user confusion caused by a single file being subordinated to multiple, different folders can be prevented.

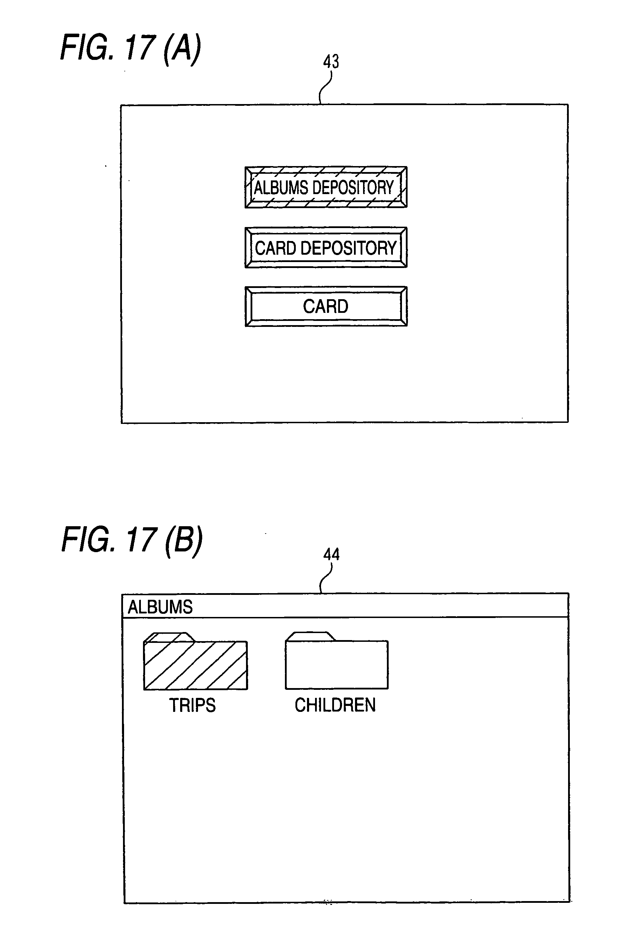

The file operation process 33 is a process for displaying an index for all the files, stored on the HDD 15, that belong directly to an arbitrary folder. The file operation process 33 accepts the section and the operation for a file included in the index that is displayed. Specifically, the file operation process 33 is initiated, for example, by selecting "browse" on a screen in Fig. 16A. When specifically, as an example, the screen in Fig. 17A is displayed on the display unit 14 and a user selects a target button to be highlighted and presses the [OK] button, and the file operation process 33 accepts, as a selected folder, a folder consonant with the button that is highlighted when the [OK] button is pressed. At this time, in Fig. 17A, an [Albums depository] button corresponds to the [Albums] folder, a [Cards depository] button corresponds to the [Cards] folder and a [Card] button corresponds to the removable memory 19. Thereafter, the index for all the files that are stored while belonging directly to the selected folder is displayed.

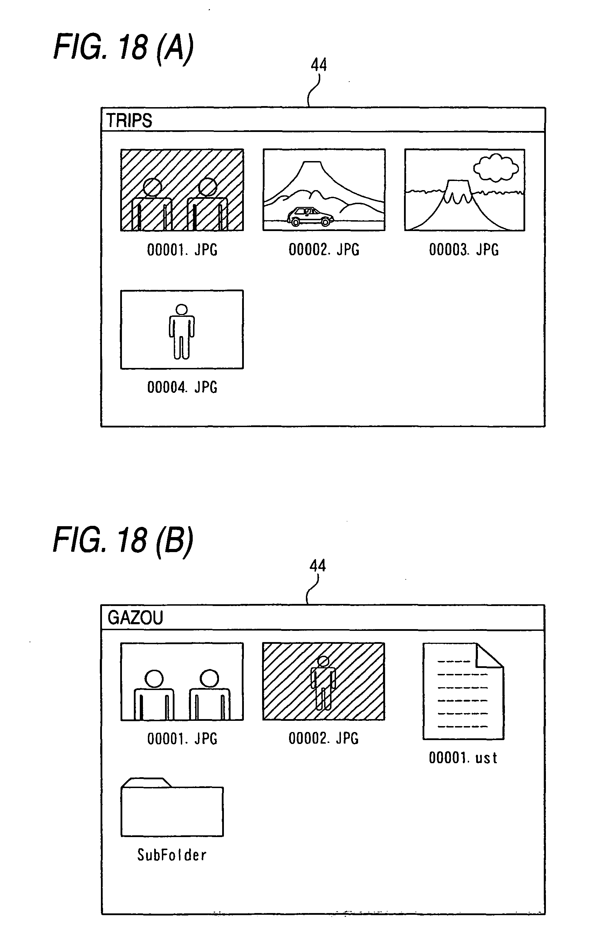

In the example in Fig. 11, there are no files that belong directly to the [Albums] folder, and only folders are present. Therefore, when the [Albums depository] button is selected, as shown in Fig. 17B, the index for files is not shown on the screen to display an index for files, and only the list of folder icons that represent folders that belong is displayed. In Fig. 17B, when the "trips" folder, for example, is selected and is highlighted and the [OK] button is pressed, the file operation process 33 accepts the "trips" folder as a selected folder. Since four image files are stored directly under the "trips" folder, a list of thumbnail images, which are stored in the thumbnail image data area of all the image files stored directly under the "trips" folder, is displayed as an index for the files, as shown in Fig. 18A. At this time, the file operation process 33 stores the thumbnail images to be displayed in correlation with the file names of the image files wherein the thumbnail image data for these thumbnail images are stored, so that an image file can be identified when a corresponding thumbnail image is selected. The same process is performed for folder icons and document icons, which will be described later. When the list of thumbnail images is displayed as the index, a search for a target image file can be easily performed, and the operation for the image file can be improved.

The same process is performed when the [Cards depository] button is selected on the screen shown in Fig. 17A. When the [Cards depository] button is selected, and when the "Gazou" folder is accepted as the selected folder, as shown in Fig. 18B, only thumbnail images of image files "00001.JPG" and "00002.JPG", which belong directly to the "Gazou" folder, are displayed as the indexes of files. On the screen for the display of file indexes, as shown in Fig. 18B, not only file indexes and a folder icon, but also a document icon is displayed that represents another file (e.g., "00001.ust") that belongs directly to the selected folder. As is apparent from Fig. 18B, when the "Gazou" folder is the selected folder, the files indexes do not include thumbnail images for image files "00003.JPG" and "00004.JPG", which belong directly to "SubFoleder" folder that belongs directly to the "Gazou" folder. In this case, image files "00003.JPG" and "00004.JPG" do not belong directly to the "Gazou" folder, but are subordinated to the "Gazou" folder, because, in accordance with the directory tree structure, these files are stored directly under a folder that is created under the "Gazou" folder.

That is, the file operation process 33 does not include, in the index, the thumbnail image of an image file that is subordinated to, but does not belong directly to a selected folder. Therefore, in order to display the index for the selected folder, only the image files that belong directly to the folder must be searched, and the subordinate image files need not be searched by tracking directories. Therefore, the search time can be reduced, and a quick display is possible. Furthermore, since the displaying of the file index and the limiting of the index in a general file system are identical, i.e., since a file that is subordinated to a specific folder but does not belong directly to the specific folder is not included in the index for the folder, the tree structure of the HDD 15 is easily understood by a user. When, for example, a folder is selected, and only image files that belong directly to the folder are included in the folder, the user can easily apprehend which image files belong directly to the pertinent folder. Further, when a folder icon is displayed together with the image files, the user can easily apprehend the hierarchical structure of the folder.

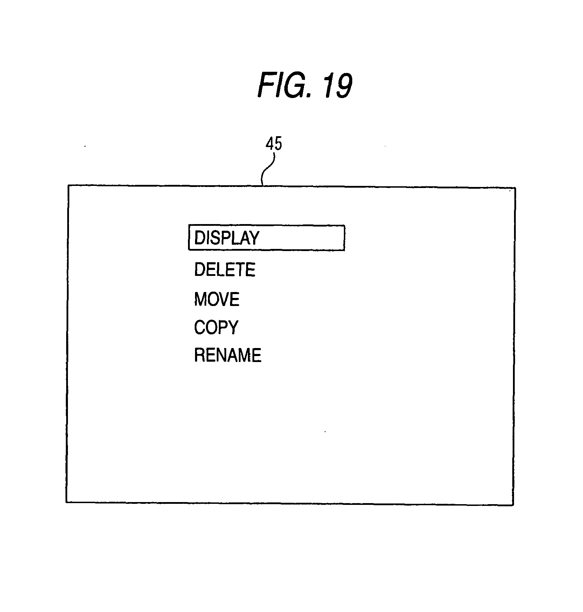

The file operation process 33 also accepts the selection and the operation of a file included in an index that is displayed. Specifically, for example, when a user selects a thumbnail image on a screen shown in Fig. 18A or 18B, and presses the [OK] button, the selection is accepted. When the selection has been accepted, then, the operation for the file is accepted. Specifically, for example, a screen shown in Fig. 19 is displayed on the display unit 14, and when a user moves the cursor to a target operation entry and presses the [OK] button, the operation entry whereat the cursor is positioned when the [OK] button is pressed is accepted as a selected operation. When the operation has been accepted, the file operation process 33 outputs, to the operation performance process 34, the file name of an image file that is consonant with the selected thumbnail image, and operation information for the accepted operation.

The operation performance process 34 is a process for performing an operation for a file. When the file name of the image file and the operation information are received, the operation performance process 34 performs an operation, indicated by the operation information, for the image file specified by the file name. When "display", for example, is selected as an operation, a digital image stored in an image file (hereinafter referred to as a "selected image file") that is consonant with the output file name is displayed on the display unit 14. When "delete", for example, is selected as an operation, the selected image file is deleted. When move is selected, a folder selection screen (not shown) for selecting a destination folder is displayed, and the selected image file is moved to a folder selected on the folder selection screen. When an image file having the same name is already present in the folder selected on the folder selection screen, a file name that does not overlap is provided for the image file that is to be stored. When copy is selected, a folder selection screen is displayed for selecting a copy destination folder, and the selected image file is copied to a folder selected on the folder selection screen. When a folder to which the selected image file belongs directly is selected, the image file is stored while a file name that does not overlap is provided for the image file. When rename is selected, a file name designation screen (not shown) is displayed for the designation of a file name, and the file name of the selected image file is changed to the file name designated on the file name designation screen.

According to the second embodiment described above, all the files stored in the removable memory 19 are stored on the HDD 15 as being subordinated to the [Cards folder], while the directory tree structure of the removable memory 19 is maintained. As a result, all the files stored in the removable memory 19 can be completely backed up. Further, image files stored in the removable memory 19 are stored on the HDD 15 while the files are placed directly under a selected folder, the indexes for all the files that belong directly to the folder are displayed, and an operation for a file included in the displayed indexes is accepted. Thus, the operation capability of the image file is increased.

In addition, according to the second embodiment, since the files stored in the removable memory 19 are completely backed up, the correlation between files other than image files, like a printing designation file and a layout designation file, that are stored in correlation with image files can be maintained.

It should be noted that, in the second embodiment, the list of thumbnail images is displayed as an index; however, the list of file names may be displayed as an index.

### (Third Embodiment)

The mode for an image storage apparatus and a program therefor that achieve the third objective will now be described based on one embodiment. No explanation will be given for the sections that are substantially the same as those in the first embodiment. The day a photograph was taken and the time it was stored in an image file in an Exif form is information indicating that a digital image stored in the image file was obtained, and in a third embodiment, the day photographed and time corresponds to the creation time of an image file. Further, a "predetermined folder" cited in claims is an arbitrary folder to which an image file of a predetermined type, which is stored in the image storage apparatus, is subordinated. In the explanation for the third embodiment, a case wherein the root folder in the removable memory, which is detachable from the image storage apparatus, is fixed as a "predetermined folder" is employed as an example. That is, in the third embodiment, an explanation will be given by employing, as an example, a case for the storage, in the image storage apparatus, all of the Exif files that are obtained by a digital still camera and are stored in a removable memory. The root folder is the folder having the highest precedence of all the folders that serve as individual nodes for the directory tree structure of the removable memory, and is the starting point of the directory tree structure.

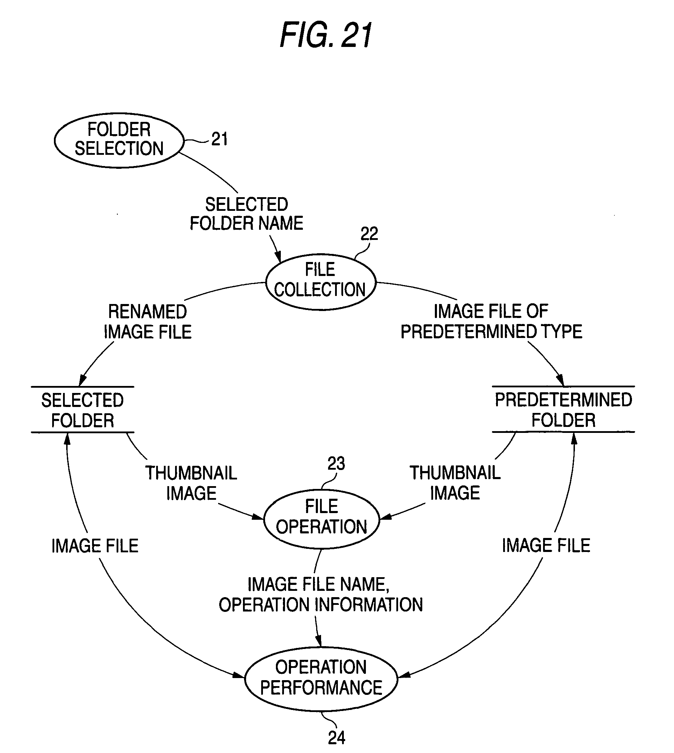

Fig. 21 is a data flow diagram showing an image storage program. As shown in the drawing, the image storage program permits an image storage apparatus 1 to perform a folder selection process 21, a file collection process 22, a file operation process 23 and an operation performance process 24.

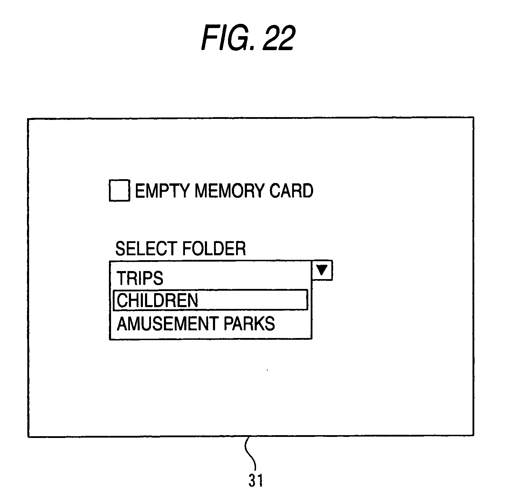

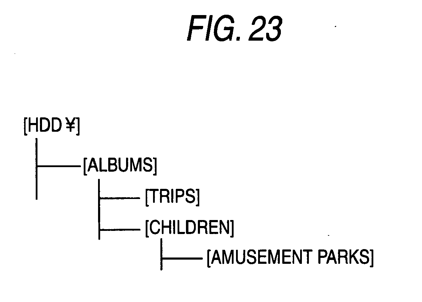

The folder selection process 21 is a process for selecting a folder on an HDD 15. The folder selection process 21 is initiated when a user enters a predetermined instruction while a removable memory 19 is loaded in an input unit 17. When the process is instructed, first, the folder selection process 21 displays, for example, a folder selection screen 31 shown in Fig. 22 on a display unit 14. The folder names of folders prepared on the HDD 15 are displayed as choices on the dropdown list for the folder selection screen 31. Since only the folder names of the folders prepared on the HDD 15 are displayed, folders subordinated to the root folder of the removable memory 19, which is a predetermined folder, are not displayed. Therefore, since the selection of folders that are subordinated to the predetermined folder is disabled, the confusion a user experiences when a single file is subordinated to multiple different folders can be prevented. Further, in the third embodiment, in order to easily manage image files, a folder for an image file storage is arbitrarily created under an [Albums] folder, and image files are stored directly under the created folder. Therefore, assuming that the directory tree structure for the HDD 15 before files are stored is as shown in Fig. 23, folders superior to the [Albums] folder, including the [Albums] folder, are not displayed on the dropdown list. As is described above, when the structure in Fig. 23 is the directory tree structure for the HDD 15, only "trips", "children" and "amusement parks" are shown on the dropdown list on the folder selection screen 31, as shown in Fig. 22. When the user moves the cursor to a target folder name on the folder selection screen 31 and presses the [OK] button, the folder selection process 21 accepts, as the selected folder, the folder consonant with the folder name whereat the cursor is positioned when the [OK] button is pressed. When the selection of the folder has been accepted, the folder selection process 21 outputs the selected folder name to the file collection process 22.

The file collection process 22 is a process for searching for an Exif file subordinated to the predetermined folder, for renaming the obtained Exif file to a file name that represents the creation time of this Exif file, and for storing the resultant file in the HDD 15, with the file belonging directly to the folder selected using the folder selection process 21. Specifically, as an example, the file collection process 22 sequentially traces a directory toward the lower depths, beginning at the predetermined folder, and searches for an Exif file that is stored directly under the predetermined file and an Exif file that is stored directly under a folder subordinated to the predetermined folder. When Exif files are found, these Exif files are copied to a location immediately under the selected folder. At this time, the file collection process 22 obtains a day and time photographed, based on information attached to the obtained Exif file, and changes the file name of a new Exif file created by copying the original Exif file to the file name that represents the obtained day and time photographed.

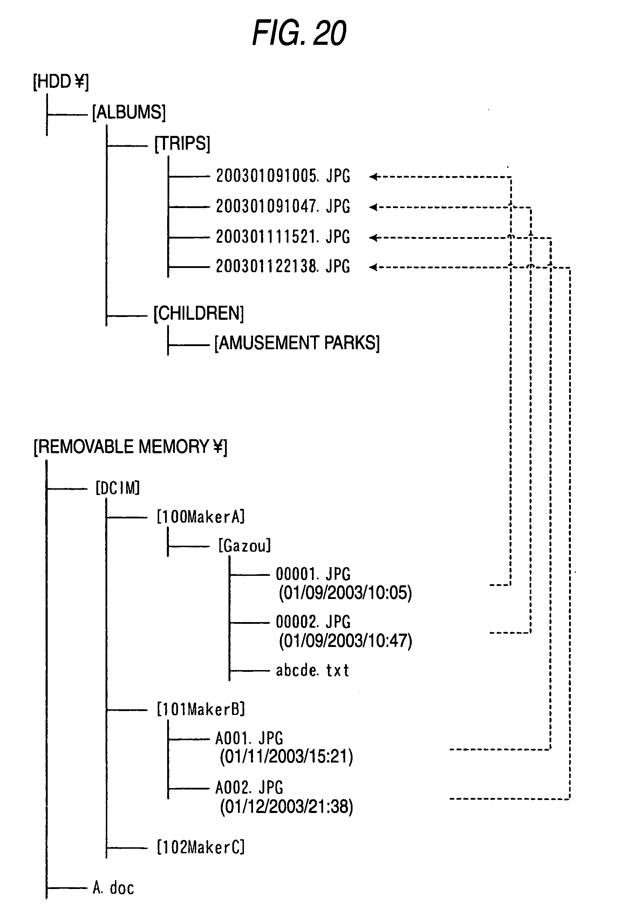

Fig. 20 is a schematic diagram showing an example directory tree structure for the HDD 15 after Exif files have been stored. Assume, for example, that the directory tree structure of the removable memory 19 is the tree shown in Fig. 20. In Fig. 20, the date indicated by () under each Exif file stored in the removable memory 19 represents a day and time photographed that is stored in information attached to the Exif file. In the explanation for the third embodiment, a day and time photographed that represents the date, the hour and the minute is employed as an example creation time; however, the creation time may be information indicating only a date, or only an hour and a minute, and the information represented by the creation time can be appropriately designated as needed. When the folder selection process 21 outputs the folder name, the file collection process 22 searches for an Exif file by sequentially tracing the directory, beginning with a [removable memory ¥] folder, which is a predetermined folder. As a result, "00001.JPG", "00002.JPG", "A001.JPG" and "A002.JPG" are found, in that order. When "00001.JPG", for example, is found, the file collection process 22 stores the copy of "00001.JPG" directly under the [trips] folder, with file name "200301091005.JPG". In this case, "2003" in the file name corresponds to year 2003 for the day and time photographed. Similarly, "01" corresponds to January, "09" corresponds to the 9th, and "1005" corresponds to five past ten. Therefore, the file name represents the day and time photographed. In the same manner, the other Exif files are renamed, and all the resultant files are stored directly under the [trips] folder. When a file is renamed with a file name that represents the day and time photographed, the date, the hour and the minute whereat the image file was created can be obtained based on the file name. Thus, means for obtaining the day and time photographed, whereat the image file was created, need not be separately prepared, and in order to apprehend the day and time photographed, a process need not be performed to open an image file and obtain the day and time photographed based on the attached information. Therefore, the time required to obtain the day and time photographed can be reduced. Further, since the file collection process 22 in the third embodiment acquires, as the creation time, the day and time photographed that is included in the information attached to an image file, the time whereat the digital image held in the image file was photographed can be exactly obtained. Generally, data indicating a date and time whereat a file was created are added to the file; however, these data may be changed each time copying or editing is performed, and do not always represent the time whereat the digital image held in the image file was photographed. Therefore, when the day and time photographed that are included in the attached information is obtained as the creation time for the image file, the time whereat the digital image was photographed can be precisely apprehended. It should be noted that when the image file is not an Exif file form, information added to the image file may be obtained that corresponds to the creation time.

In the third embodiment, an explanation has been given for an example wherein the predetermined folder is fixed as the root folder for the removable memory 19. However, a user may select a predetermined folder. In this case, the predetermined folder may be a folder on the HDD 15. Further, a digital still camera and the image storage apparatus can be connected by a cable, and a folder in the storage means of the digital still camera can be employed as a predetermined folder. Furthermore, in the third embodiment, all the Exif files stored in the removable memory 19 have been held to belong directly to a selected folder. However, Exif files to be stored may be selected by a user. In addition, a folder in the removable memory 19 may be selected, and only Exif files that belong directly to a selected folder or are subordinated to the selected folder may be stored.

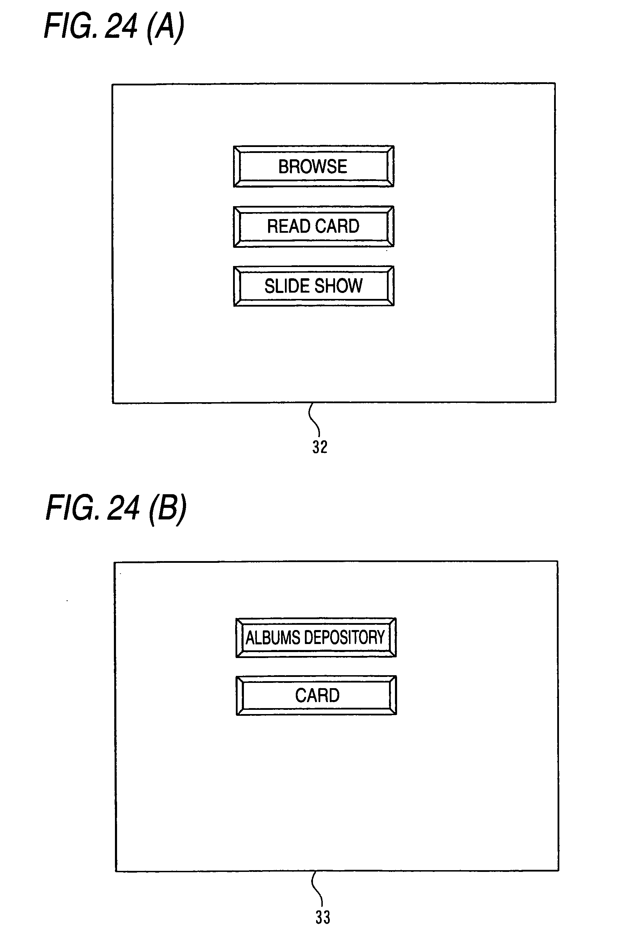

The file operation process 23 is a process for displaying the index for all the files that belong directly to a folder, and for accepting an operation for files included in the displayed index. Specifically, the file operation process 23 is initiated when, for example, "browse" is selected on a screen 32 on Fig. 24A. When the process is started, specifically, the file operation process 23 displays, as an example, a screen 33 in Fig. 24B on the display unit 14, and when a user selects a target button to be highlighted and presses the [OK] button, accepts, as a designated folder, a folder that is consonant with the button that is highlighted when the [OK] button is pressed. In this case, an [Albums depository] button in Fig. 24B corresponds to the [Albums] folder, and a [Card] button corresponds to the removable memory 19. Thereafter, an index for all the files stored directly under the designated folder is displayed on the index display screen.

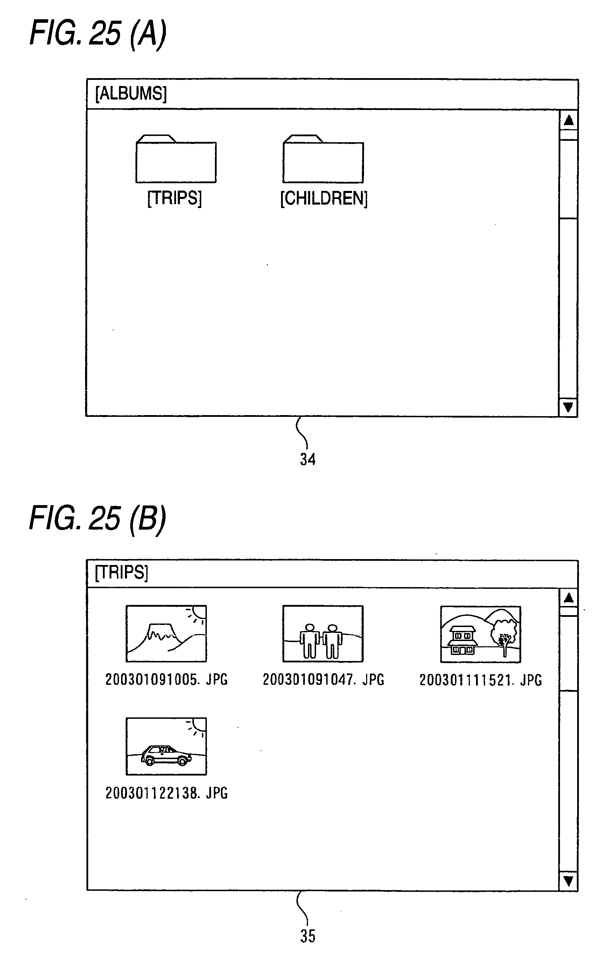

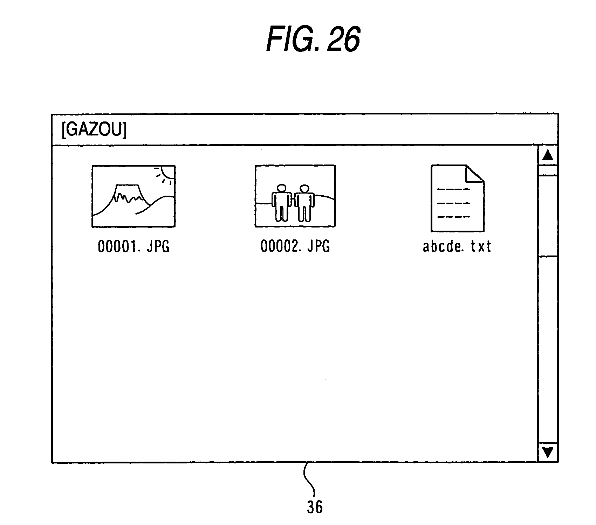

Figs. 25A, 25B and 26 are schematic diagrams showing an index display screen. For the [Albums] folder in Fig. 20, for example, there are no files that belong directly to this folder, and only directly belonging folders are present. Therefore, when the [Albums depository] button is selected, as shown in Fig. 25A, a index of files is not displayed and only a list of the folder icons that represent directly belonging folders is displayed on the index display screen 34. In Fig. 25A, when a "trips" folder, for example, is selected to be highlighted and the [OK] button is pressed, the file operation process 23 accepts the "trips" folder as the next designated folder. When the "cancel" button is pressed, it is assumed that a folder having a higher precedence is to be designated. As previously described, since four Exif files are stored directly under the "trips" folder by the file collection process 22, on an index display screen 35 in Fig. 25B, the file operation process 23 displays, as a file index, a list of thumbnail images that are stored in the thumbnail image data areas of these four Exif files. When the list of thumbnail images is displayed as an index, a search for a target image file can be easily performed, and the operation for an image file can be improved. Furthermore, as shown in the drawing, the file operation process 23 displays, under each thumbnail image, the file name of an image file consonant with the thumbnail image. Therefore, a user can quickly obtain the creation time of the image file consonant with each thumbnail image.

In addition, when, for example, the [Card] button is selected and the "Gazou" folder is accepted as a designated folder, on an index display screen 36 in Fig. 26, the file operation process 23 displays, in an index, not only thumbnail images for image files "00001.JPG" and "00002.JPG" that belong directly to the [Gazou] folder, but also a file icon that corresponds to file "abcde.txt", which is a file other than an Exif file. That is, the file operation process 23 displays an index for all the files that belong directly to the folder, regardless of whether they are Exif files.

The file operation process 23 further accepts an operation for a file included in the displayed index. Specifically, when, for example, the manipulation for pressing the [OK] button is performed while a thumbnail image is selected on the index display screen, the file operation process 23 accepts this manipulation as an operation for the display of a digital image stored in an Exif file that is consonant with the selected thumbnail image. When the display operation is accepted, the file operation process 23 outputs to the operation performance process 24 the file name of the Exif file consonant with the selected thumbnail image and operation information indicating "display". Also, when a [Menu button] button is pressed while a thumbnail image is selected, the file operation process 23 displays an operation selection menu for selecting select an available operation for an Exif file that is consonant with the selected thumbnail image. Then, an operation other than the display operation is to be accepted. In this case, operation choices displayed on the operation selection menu are, for example, copy, rename, move and delete. The same process is performed when a file icon that represents a file other than an Exif file is selected, and available operation choices for the file are displayed on the menu.

The operation performance process 24 is a process for performing an accepted operation. When the Exif file name and the operation information are output by the file operation process 23, the operation performance process 24 performs an operation designated by the operation information for a file corresponding to the file name. When the operation information indicates "display", an Exif file having the pertinent file name is read from the HDD 15, and a digital image held in the Exif file is displayed on the display unit 14.

According to the above described third embodiment of the present invention, Exif files that are subordinated to the root folder of the removable memory 19 are stored directly under the folder selected by the file selection process, and an index for all the files that belong directly to the selected folder is displayed. As a result, the Exif files located at multiple depths in the removable memory 19 can be viewed on a list. At this time, since the targets to be displayed on a list are only those in the current directory, an image file need not be searched for by tracing the directory each time the display of a list is required, and the time required to display the list can be reduced. Thus, according to this image storage apparatus 1, the image files can be browsed within a short period of time.

It should be noted that in the third embodiment the list of thumbnail images is displayed as an index; however, a list of file names may be displayed as an index.

Furthermore, in the explanation for the third embodiment, an image file for an Exif file form has been employed as an example image file of a predetermined type. However, the image file of a predetermined type may be an image file having another form, like a JPEG form, a TIFF form or a bitmap form. In this case, a thumbnail image must be stored separately, in correlation with the form.

Further, in the third embodiment, an image file obtained by a search is copied, and the copy is stored on the HDD 15, while the image file obtained by the search is maintained. However, an image file obtained by the search may be moved and stored.

## Claims

1. An image storage apparatus comprising:
storage means;
selection means for selecting a folder in said storage means; and
file operation means for, in accordance with said selected folder, displaying indexes for files or folders subordinate to said selected folder, either in a first mode for displaying indexes for files or folders that belong directly to said selected folder, or in a second mode for displaying indexes for all image files of a predetermined type that are subordinate to said selected folder, and for accepting an operation for a file or a folder included in said displayed index.

2. An image storage apparatus according to claim 1, further comprising:
setup means for setting, for each folder in said storage means, either said first mode or said second mode to display said index of said file or said folder that is subordinated to said selected folder.

3. An image storage apparatus according to claim 1 or 2, wherein said file operation means displays, as an index for a file that is subordinated to said selected folder, a list of thumbnail images of said image files that are subordinated to said selected folder and are stored in said storage means.

4. An image storage apparatus according to claim 1, 2 or 3, further comprising:
input means for entering, in said storage means, an image file that is stored on an external storage medium, while directly subordinating said image file to a first folder for which an index is displayed in said first mode, and for entering, in said storage means, all the image files stored on said external storage medium, while maintaining a directory tree structure for said external storage medium and placing all said subordinated image files in a second folder for which an index is displayed in said second mode.

5. An image storage program permitting a computer to function as:
storage means;
selection means for selecting a folder in said storage means; and
file operation means, for, in accordance with said selected folder, displaying indexes for files or folders subordinate to said selected folder, either in a first mode, for displaying indexes for files or folders that belong directly to said selected folder, or in a second mode, for displaying all files of a predetermined type that are subordinate to said selected folder, and for accepting an operation for a file or a folder included in said displayed index.

6. An image storage apparatus comprising:
storage means;
selection means for selecting an arbitrary folder subordinate to a first folder in said storage means;
input means for entering, in said storage means, an image file stored on an external storage medium while directly subordinating said image file to said folder selected by said selection means, and for entering, in said storage means, all the files stored on said external storage medium, while maintaining a directory tree structure of said external storage medium and subordinating said files to a second folder in said storage means; and
file operation means for displaying indexes for all files that are stored in said storage means and that are directly subordinated to said arbitrary folder, and for accepting an operation for files included in said indexes that are displayed.

7. An image storage apparatus according to claim 6, wherein said file operation means displays, as an index for an image file that is stored in said storage means and is directly subordinated to an arbitrary folder, a list of thumbnail images for all the image files that are stored in said storage means and that are directly subordinated to said arbitrary file.

8. An image storage apparatus according to claim 6 or 7, wherein said input means stores, in said storage means, all the image files of a predetermined type stored on said external storage medium, while directly subordinating said image files to said folder selected by said selection means.

9. An image storage apparatus according to claim 6, 7 or 8, wherein said first folder is not subordinated to said second folder.

10. An image storage apparatus according to claim 6, 7 or 8, wherein said second folder is not subordinated to said first folder.

11. An image storage program permitting a computer to function as:
storage means;
selection means for selecting an arbitrary folder subordinated to a first folder in said storage means;
input means for entering, in said storage means, an image file stored on an external storage medium while placing said image file directly under said folder selected by said selection means, and for entering, in said storage means, all files stored on said external storage medium, while maintaining a directory tree structure of said external storage medium and placing said files subordinate to a second folder in said storage means that is not subordinate to said first folder; and
file operation means for displaying indexes for all the files that are stored in said storage means and belong directly to said arbitrary folder, and for accepting an operation for files included in said displayed indexes.

12. An image storage apparatus comprising:
storage means;
selection means for selecting a folder in said storage means;
collection means for searching for image files of a predetermined type subordinated to a predetermined folder, and for storing said image files thus found in said storage means, with placing said image files directly under said folder selected by said selection means; and
file operation means for displaying indexes for all files that are stored in said storage means and that belong directly to an arbitrary folder, and for accepting an operation for files included in said displayed indexes.

13. An image storage apparatus according to claim 12, wherein said collection means renames said image file that is found as a file having a name that represents the time said image file was created.

14. An image storage apparatus according to claim 12 or 13, wherein said selection means is capable of selecting only a folder not subordinated to said predetermined folder.

15. An image storage apparatus according to claim 12, 13 or 14, wherein said selection means is capable of selecting only a folder to which said predetermined folder is not subordinated.

16. An image storage apparatus according to one of claims 12 to 15, wherein said file operation means displays, as indexes for image files that are stored in said storage means and belong directly to an arbitrary folder, a list of thumbnail images of all the files that are stored in said storage means and belong directly to said arbitrary folder.

17. An image storage program permitting a computer to function as:
storage means;
selection means for selecting a folder in said storage means;
collection means for searching for image files of a predetermined type subordinated to a predetermined folder, and for storing, in said storage means, image files thus found that belong directly to said folder selected by said selection means; and
file operation means for displaying indexes for all files that are stored in said storage means and belong directly to an arbitrary folder, and for accepting an operation for files included in said displayed indexes.
